(19) Europäisches Patentamt / European Patent Office / Office européen des brevets

(11) **EP 3 975 580 B1**

(12) **EUROPEAN PATENT SPECIFICATION**

(45) Date of publication and mention
of the grant of the patent:
**21.02.2024  Bulletin 2024/08**

(21) Application number: **19943250.1**

(22) Date of filing: **26.08.2019**

(51) International Patent Classification (IPC):
**H04Q 11/00** (2006.01)       **H04B 10/071** (2013.01)
**H04B 10/272** (2013.01)

(52) Cooperative Patent Classification (CPC):
**H04Q 11/0067; H04B 10/071; H04B 10/272;**
H04Q 2011/0083; H04Q 2011/0088

(86) International application number:
**PCT/CN2019/102608**

(87) International publication number:
**WO 2021/035487 (04.03.2021 Gazette 2021/09)**

(54) **METHOD FOR DETERMINING CONNECTION OF OPTICAL NETWORK TERMINALS, APPARATUS AND SYSTEM**

VERFAHREN ZUR BESTIMMUNG DER VERBINDUNG OPTISCHER NETZWERKENDGERÄTE, VORRICHTUNG UND SYSTEM

PROCÉDÉ DE DÉTERMINATION DE CONNEXION DE TERMINAUX DE RÉSEAU OPTIQUE, APPAREIL ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.03.2022  Bulletin 2022/13**

(73) Proprietor: **Huawei Technologies Co., Ltd.**
**Longgang District**
**Shenzhen,**
**Guangdong 518129 (CN)**

(72) Inventor: **YANG, Sulin**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**EP-A1- 2 141 832        EP-A1- 2 141 832**
**EP-A2- 2 602 946        CN-A- 101 321 022**
**CN-Y- 201 369 727      US-A1- 2008 267 089**

**Description**

**TECHNICAL FIELD**

This application relates to optical communications technologies, and in particular, to a method for determining an optical network terminal (Optical Network Termination, OTN) connection, a device, and a system.

**BACKGROUND**

A passive optical network (Passive Optical Network, PON for short) system includes an optical line terminal (Optical Line Terminal, OLT), a plurality of optical network units (Optical Network Unit, ONU) or optical network terminals (Optical Network Termination, ONT for short) located on a user side, and an optical distribution network (Optical Distribution Network, ODN) configured to split/couple or multiplex/demultiplex an optical signal between the optical line terminal and the optical network terminal.

Currently, representative PON technologies are a gigabit passive optical network (Gigabit Passive Optical Network, GPON for short), an Ethernet passive optical network (Ethernet Passive Optical Network, EPON for short), an XG(S)-PON (10G (symmetric) Passive Optical Network), and a 10G-EPON (10G Ethernet Passive Optical Network). XG(S)-PON and 10G-EPON may be collectively referred to as a 10G-PON.

In the PON system, upstream and downstream light may be transmitted in a same optical fiber. In a downstream direction, the PON system works in a TDM (Time Division Multiplexing, time division multiplexing) manner, and an optical signal sent by the OLT is broadcast to all branch fibers and can reach all ONTs. In an upstream direction, the PON system works in a TDMA (Time Division Multiple Access, time division multiple access) manner, and the ONT only sends an optical signal in an authorized timeslot. Certainly, different optical fibers may alternatively be used for transmission in the upstream and the downstream directions.

In a process of deploying the ODN, it is difficult for an operator or a central office (CO, Central Office) to obtain a correct real topological structure of a PON ODN, and a location of an optical splitter and a connection relationship between the optical splitter and an ONT need to be manually recorded on a resource management system. However, manual recording is error-prone, and the relationship between the optical splitter and the ONT changes over time. Consequently, the recorded connection relationship between the optical splitter and the ONT is incorrect. Therefore, when the PON system is faulty during runtime, a point of fault cannot be quickly and correctly determined, and the point of fault cannot be quickly rectified.

EP 2141832 A1 discloses a method of automated network topology discovery in passive optical networks in which an optical line terminal (OLT) is connected to a plurality of optical network units (ONUs) via a plurality of optical splitters and an ONU and an OLT capable of carrying out the method of automated network topology. discovery.

EP 2602946 A2 discloses a single-fiber bidirectional optical module and a passive optical network system that uses the single-fiber bidirectional optical module.

**SUMMARY**

In view of the foregoing problem, this application provides a method for determining an optical network terminal connection, a device, and a system.

According to a first aspect, an embodiment of this application provides an optical network terminal in accordance with appended claim 1. In this embodiment of this application, the optical network terminal may obtain the intensity information of the backward optical signal generated by the first upstream optical signal in the fiber-optic network, and the intensity information of the backward optical signal may be used to determine a connection relationship between the optical network terminal and an optical splitter. Therefore, when the PON system runs, a point of fault can be quickly and correctly determined based on the connection relationship, and the point of fault can be quickly rectified.

In a possible design, the first downstream optical signal carries a quantity of measurement times, so that the optical network terminal may obtain the intensity of the measured backward optical signal.

In a possible design, the optical network terminal further includes a media access control MAC module, configured to parse indication information carried in the first downstream electrical signal, where the first downstream electrical signal is converted from the first downstream optical signal.

The processing module is further configured to obtain the indication information of the first downstream electrical signal that is parsed by the MAC module.

In a possible design, the downstream optical signal receiver further receives a second downstream optical signal, where the second downstream optical signal carries indication information that indicates the optical network terminal to send the first upstream optical signal and information about a time point at which the optical network terminal sends the first upstream optical signal. Therefore, the optical network terminal may determine, based on the indication information, to send the first upstream optical signal.

In a possible design, the first downstream optical signal further carries an identifier of the optical network terminal sending the first upstream optical signal and information about the time point at which the first upstream optical signal is sent.

In a possible design, the optical network terminal further includes a storage module, configured to store information carried in the first downstream optical signal and/or the second downstream optical signal and store the intensity information of the backward optical signal.

In a possible design, the upstream optical signal transmitter is further configured to send the first upstream optical signal based on the indication of the processing module, and a wavelength of the first upstream optical signal, a wavelength of the backward optical signal, and a wavelength of the second upstream optical signal are the same.

In a possible design, the optical network terminal further includes a first upstream optical signal transmitter, configured to send the first upstream optical signal based on the indication of the processing module, a wavelength of the first upstream optical signal is the same as a wavelength of the backward optical signal, and the wavelength of the first upstream optical signal is different from a wavelength of the second upstream optical signal.

According to a second aspect, an embodiment of this application provides a method for determining an optical network terminal ONT connection in accordance with appended claim 5. In this embodiment of this application, the optical network terminal may obtain the intensity information of the backward optical signal generated by the first upstream optical signal in the fiber-optic network, and the intensity information of the backward optical signal may be used to determine a connection relationship between the optical network terminal and an optical splitter. Therefore, when the PON system runs, and the system is faulty, a point of fault can be quickly and correctly determined based on the connection relationship, and the point of fault can be quickly rectified.

In a possible design, the optical network terminal further parses the indication information carried in the first downstream electrical signal, where the first downstream electrical signal is converted from the first downstream optical signal.

In a possible design, the optical network terminal further receives a second downstream optical signal, where the second downstream optical signal carries indication information that indicates the optical network terminal to send the first upstream optical signal and information about a time point at which the optical network terminal sends the first upstream optical signal.

In a possible design, the first downstream optical signal further carries an identifier of the optical network terminal sending the first upstream optical signal and information about the time point at which the first upstream optical signal is sent.

In a possible design, the optical network terminal further stores information carried in the first downstream optical signal and information carried in the second downstream optical signal and stores the intensity information of the backward optical signal.

In a possible design, the optical network terminal further sends the first upstream optical signal, where a wavelength of the first upstream optical signal, a wavelength of the backward optical signal, and a wavelength of the second upstream optical signal are the same.

In a possible design, the optical network terminal sends the first upstream optical signal, where a wavelength of the first upstream optical signal is the same as a wavelength of the backward optical signal, and the wavelength of the first upstream optical signal is different from a wavelength of the second upstream optical signal.

According to a third aspect, an embodiment of this application provides a method for determining an optical network terminal ONT connection in accordance with appended claim 9. In this embodiment of this application, the device may determine a connection relationship between an optical network terminal and the optical splitter based on the intensity information of the backward optical signal.

In a possible design, the device further determines a difference between the intensity information sent by the third ONT and intensity information sent by a fourth ONT, where the fourth ONT is an ONT that is in the second ONT and that is connected to a different optical splitter from the first ONT. The device further determines a split ratio of a first stage optical splitter based on the difference between the intensity information sent by the third ONT and the intensity information sent by the fourth ONT.

In a possible design, the device stores a threshold range of the split ratio of the first stage optical splitter, and that the device determines a split ratio of a first stage optical splitter includes: The device determines the split ratio of the first stage optical splitter based on the threshold range of the split ratio and the difference between the intensity information sent by the third ONT and the intensity information sent by the fourth ONT.

In a possible design, the device is an optical network terminal. The optical network terminal further receives a first downstream optical signal and a second downstream optical signal, where the first optical signal carries indication information that indicates the optical network terminal to obtain the backward optical signal, an identifier of the optical network terminal, and indication information that indicates the optical network terminal to obtain the intensity information of the backward optical signal that is sent by the second ONT, and the second downstream optical signal carries the identifier of the optical network terminal, and indication information that indicates the optical network terminal to obtain the intensity information of the backward optical signal that is sent by the second ONT; or the optical network terminal receives a first downstream optical signal, where the first downstream optical signal carries indication information that indicates the optical network terminal to send the first upstream optical signal, information about a time point at which the first upstream optical signal is sent, and indication information that indicates the optical network terminal to obtain the intensity information of the backward optical signal that is sent by the second ONT.

In a possible design, the optical network terminal further sends a third upstream optical signal, where the third upstream optical signal carries information about the third ONT connected to the same optical splitter as the first ONT.

In a possible design, the device is an optical line terminal. The optical line terminal further sends a first downstream optical signal, where the first downstream optical signal carries indication information that indicates the second ONT to obtain the intensity information of the backward optical signal, so that the second ONT may obtain the intensity information of the backward optical signal.

In a possible design, the first downstream optical signal further carries a time point at which the backward optical signal is measured and/or a quantity of measurement times, so that the indication for measuring the intensity information of the backward optical signal is more accurate.

In a possible design, the optical line terminal sends a second downstream optical signal, and the second downstream optical signal carries an identifier of the optical network terminal sending the first upstream optical signal and information about a time point at which the first upstream optical signal is sent. In this way, the optical network terminal sending the first upstream optical signal may send the first upstream optical signal, so that a solution proceeds smoothly.

In a possible design, the first downstream optical signal further carries an identifier of the optical network terminal sending the first upstream optical signal and information about the time point at which the first upstream optical signal is sent. In this way, the indication for sending the first upstream optical signal is clearer and more accurate, so that the solution proceeds smoothly.

In a possible design, the device is an upper-layer network device, and that the device receives intensity information that is obtained by the second ONT and that is of a backward optical signal generated by the first upstream optical signal in a fiber-optic network includes: The upper-layer network device receives the intensity information that is sent by an optical line terminal and obtained by the second ONT and that is of the backward optical signal generated by the first upstream optical signal in the optical fiber network. In this way, this application is applicable to a plurality of different network structures, thereby improving flexibility of using the solution.

In a possible design, the optical line terminal sends a third downstream optical signal, where the third downstream optical signal indicates the second ONT to send the intensity information of the backward optical signal. Therefore, the OLT obtains the intensity information.

In a possible design, the first ONT is an ONT that sends the first upstream optical signal for a first time and the method further includes: The device determines an ONT that sends the first upstream optical signal next time, to determine connections between all ONTs and the optical splitter.

In a possible design, that the optical line terminal determines an ONT that sends the first upstream optical signal next time includes: determining the ONT that sends the first upstream optical signal next time from other ONTs other than the first ONT in the PON system; or determining the ONT that sends the first upstream optical signal next time from ONTs other than the first ONT and the third ONT in the PON system. This ensures that all ONTs can be connected to the optical splitter.

According to a fourth aspect, an embodiment of this application provides a device in accordance with appended claim 13.

## BRIEF DESCRIPTION OF DRAWINGS

FIG. 1 is a schematic structural diagram of a passive optical network system;
FIG. 2A is a schematic structural diagram of an optical line terminal according to an embodiment of this application;
FIG. 2B is a schematic structural diagram of an optical network unit according to an embodiment of this application;
FIG. 2C is a schematic structural diagram of an optical network unit according to an embodiment of this application;
FIG. 3A is a flowchart of a method for determining an optical splitter connected to an ONT according to an embodiment of this application;
FIG. 3B is a schematic diagram of an intensity of a received backward optical signal according to an embodiment of this application;
FIG. 4 is a flowchart of a method for determining an optical splitter connected to an ONT according to another embodiment of this application;

FIG. 5 is a flowchart of a method for measuring an intensity of a received backward optical signal that is performed by an ONT after receiving a message from an OLT according to an embodiment of this application; and

FIG. 6 is a schematic structural diagram of a device according to an embodiment of this application.

**DESCRIPTION OF EMBODIMENTS**

The following describes technical solutions in embodiments of this application with reference to the accompanying drawings in the embodiments of this application. In descriptions of this application, unless otherwise specified, "a plurality of" means two or more than two. In addition, to clearly describe the technical solutions in the embodiments of this application, terms such as "first" and "second" are used in embodiments of this application to distinguish between same items or similar items that have basically same functions and purposes. A person skilled in the art may understand that words such as "first" and "second" do not limit a quantity or an execution sequence, and words such as "first" and "second" do not indicate a definite difference. "A and/or B" in the present invention may be explained as any one of A or B, or include A and B.

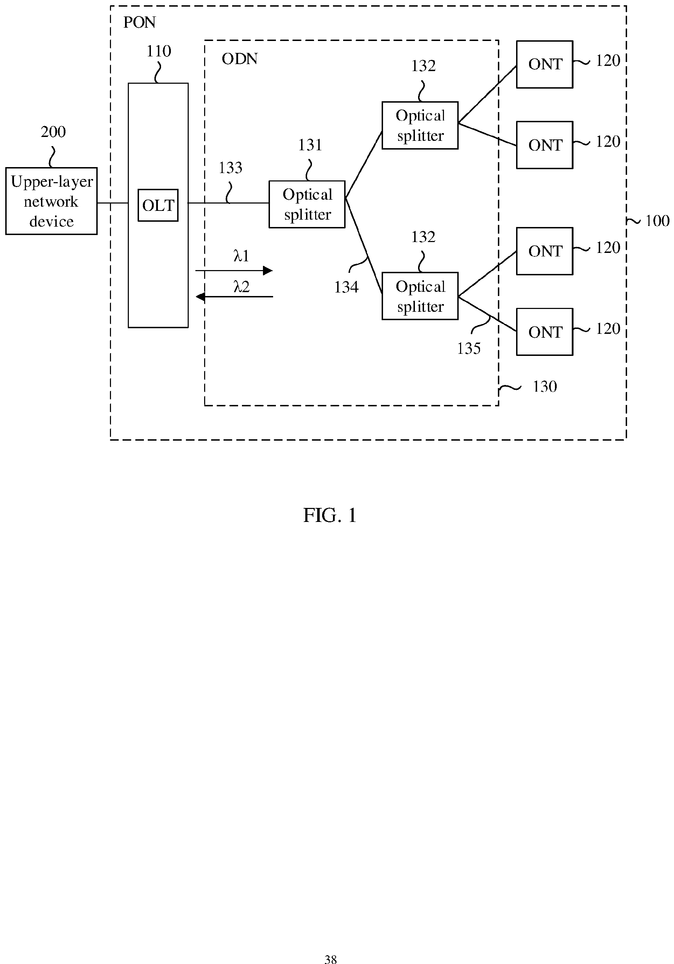

Refer to FIG. 1. FIG. 1 is a schematic structural diagram of a system according to an embodiment of the present invention. The system includes a passive optical network system 100 and a network device 200 coupled to the passive optical network system 100. The upper-layer network device 200 may be a network device 200 in the Internet, a community access television (Community Access Television, CATV) network, or a public switched telephone network (Public Switched Telephone Network, PSTN). The passive optical network PON system 100 includes at least one optical line terminal 110, a plurality of optical network terminals 120, and one optical distribution network 130. The OLT 110 is connected to the plurality of optical network terminals 120 through the ODN 130. A direction from the OLT 110 to the optical network terminal 120 is defined as a downstream direction, and a direction from the optical network terminal 120 to the OLT 110 is defined as an upstream direction.

The passive optical network system 100 may be a communications network in which any active device is not required to implement data distribution between the OLT 110 and the optical network terminal 120. For example, in a specific embodiment, the data distribution between the OLT 110 and the optical network terminal 120 may be implemented by using a passive optical device (such as an optical splitter) in the ODN 130. In addition, the passive optical network system 100 may be an asynchronous transfer mode passive optical network (ATM PON) system or a broadband passive optical network (BPON) system defined by the ITU-T G.983 standard, a gigabit passive optical network (GPON) system defined by the ITU-T G.984 standard, an Ethernet passive optical network (EPON) defined by the IEEE 802.3ah standard, or a next generation access passive optical network (NGA PON, such as an XGPON or a 10G EPON).

The OLT 110 is usually located at a central location (for example, a central office, CO), and may manage the one or more optical network terminals 120. The OLT 110 may serve as a medium between the optical network terminal 120 and the upper-layer network device 200, use data received from the upper-layer network as downstream data, forward the downstream data to the optical network terminal 120 through the ODN 130, and forward upstream data received from the optical network terminal 120 to the upper-layer network.

The optical network units 120 may be disposed at user side locations (for example, customer premises) in a distributed manner. The optical network unit 120 may be a network device used for communication between the optical line terminal 110 and a user. Specifically, the optical network unit 120 may serve as a medium between the optical line terminal 110 and the user. For example, the optical network unit 120 may forward downstream data received from the optical line terminal 110 to the user, use data received from the user as upstream data, and forward the upstream data to the optical line terminal 110 through the optical distribution network 130. It should be understood that a structure of the optical network unit 120 is similar to that of the optical network terminal (Optical Network Terminal, ONT). Therefore, an optical network unit and an optical network terminal are interchangeable in the solutions provided in this application document.

The ODN 130 may be a data distribution system, and may include an optical fiber, an optical coupler, an optical splitter, and/or another device. In an embodiment, the optical fiber, the optical coupler, the optical splitter, and/or the another devices may be a passive optical device. To be specific, the optical fiber, the optical coupler, the optical splitter, and/or the another device may be a device that distributes a data signal between the OLT 110 and the optical network terminal 120 without requiring power supply support. In addition, in another embodiment, the ODN 130 may further include one or more processing devices, for example, an optical amplifier or a relay device (Relay device). In a branch structure shown in FIG. 1, the ODN 130 may specifically extend from the OLT 110 to the plurality of optical network terminals 120 in a two-stage optical splitting manner, but may alternatively be configured as any point-to-multipoint (for example, single-level optical splitting or multi-level optical splitting) or point-to-point structure.

Refer to FIG. 1. The ODN 130 uses the optical splitter to implement data distribution. In consideration of reliability and operation and maintenance, the ODN 130 may be deployed in a two-stage optical splitting manner, and includes a first stage optical splitter 131 and a plurality of second stage optical splitters 132. A common end of the first stage optical splitter 131 is connected to the OLT 110 through a feeder fiber (Feeder Fiber) 133, and branch ends of the first stage optical splitter 131 are separately connected to a common end of the correspondingly second stage optical splitter 132 through a distribute fiber (Distribute Fiber) 134, and a branch end of each second stage optical splitter 132 is further connected to an upstream interface 1201 of the corresponding optical network terminal 120 through a drop fiber (Drop Fiber) 135. In the downstream direction, after the first stage optical splitter 131 splits a downstream data signal sent by the OLT 110 for the first time, the second stage optical splitter 132 splits the signal for the second time, to form and transmit a plurality of downstream optical signals to the optical network terminals 120. In the upstream direction, upstream data signals sent by the optical network terminals 120 are combined by using the second stage optical splitter 132 and the first stage optical splitter 131 in sequence, and then transmitted to the OLT 110. The first stage optical splitter 131 may be deployed on an optical distribution frame (Optical Distribution Frame, ODF) that is closer to the central office, and the second stage optical splitter 132 may be deployed on a remote node (Remote Node, RN).

It should be noted that the solutions provided in this application may be further applied to an active ODN network.

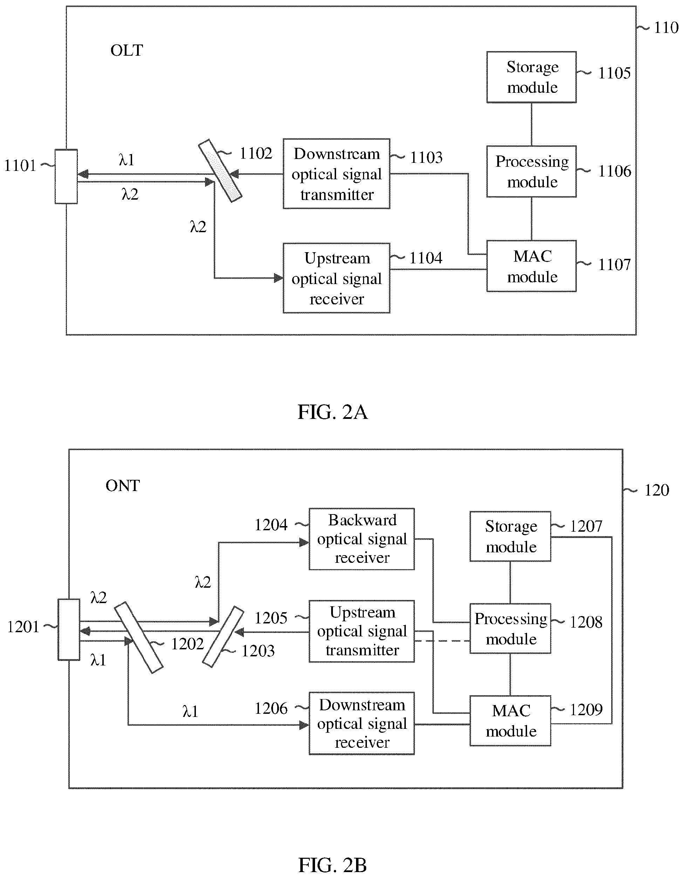

FIG. 2A is a schematic structural diagram of the OLT 110 according to an embodiment of this application. A specific structural configuration of the OLT 110 may vary depending on a specific type of the passive optical network 100. As shown in FIG. 2A, the OLT 110 may include a downstream interface 1101, a coupler 1102, a downstream optical signal transmitter 1103, an upstream optical signal receiver 1104, a storage module 1105, a processing module 1106, and a MAC module 1107.

The downstream interface 1101 may be a fiber adapter, used as an interface connected to the ODN 130 to send or receive an/a upstream/downstream optical signal. The coupler 1102 is disposed on a main optical path along an extension direction of the fiber adapter, and there is a specific included angle between the coupler 1102 and the main optical path. The coupler 1102 may couple at least a part of a downstream optical signal transmitted by the downstream optical signal transmitter 1103 to the downstream interface 1101, and couple at least a part of an upstream optical signal input from the downstream interface 1101 to the upstream optical signal receiver 1104. A wavelength of the downstream optical signal is $\lambda 1$. The upstream optical signal received by the OLT is an upstream service optical signal, and the upstream service optical signal may be a second upstream optical signal, a third upstream optical signal, a fourth upstream optical signal, or the like. A wavelength of the upstream service optical signal is $\lambda 2$.

The downstream optical signal transmitter 1103 may send, by using the coupler 1102 and through the downstream interface 1101 and the ODN 130, a downstream optical signal provided by the MAC module 1107 by using the downstream optical signal transmitter 1103 to the optical network terminal 120. The upstream optical signal receiver 1104 may receive an upstream service optical signal sent by the optical network terminal 120 through the ODN 130, convert the upstream optical signal into an upstream service electrical signal, and provide the upstream service electrical signal to the MAC module 1107 for data parsing and processing. In addition, the upstream service optical signal may include intensity information that is sent by the optical network terminal 120 through the ODN 130 and that is of a backward optical signal (backscattered or reflected) generated by an upstream test optical signal (which may also be referred to as a first upstream optical signal) in the ODN 130. The processing module 1106 determines, based on the intensity information, an optical network terminal 120 that is connected to the same optical splitter 132 as the optical network terminal 120 sending the upstream test optical signal. The backward optical signal is a signal generated by the upstream test optical signal through backscattering or reflection in the ODN 130. The intensity information is a measurement parameter that can represent a power or amplitude of the backward optical signal, for example, an instantaneous amplitude value, a return loss value, or a reflection peak height of an optical time domain reflectometer (optical time domain reflectometer, OTDR) curve of the backward optical signal. The processing module 1106 further determines a split ratio of the first stage optical splitter 131 based on the determined intensity information sent by the optical network terminal 120 that is connected to the same optical splitter 132 as the optical network terminal 120 sending the upstream test optical signal.

The downstream optical signal transmitter 1103 may be a laser diode (Laser Diode, LD), configured to transmit a downstream optical signal (denoted as a downstream optical signal $\lambda 1$ below) with a first wavelength $\lambda 1$. The upstream optical signal receiver 1104 may be a photodiode (Photo Diode, PD), for example, an avalanche photodiode (Avalanche Photo Diode, APD), configured to receive an upstream service optical signal (denoted as an upstream service optical signal $\lambda 2$ below) with a second wavelength $\lambda 2$.

In an embodiment, the coupler 1102 may be a thin film filter (thin film filter, TFF) that may transmit about 100% of the optical signal with the first wavelength $\lambda 1$ and reflect about 100% of the upstream service optical signal with the second wavelength $\lambda 2$.

FIG. 2B is a schematic structural diagram of the ONT 120 according to an embodiment of this application. As shown in FIG. 2B, the optical network terminal 120 may include an upstream interface 1201, a first coupler 1202, a second coupler (coupler) 1203, a backward optical signal receiver 1204, an upstream optical signal transmitter 1205, a downstream optical signal receiver 1206, a storage module 1207, a processing module 1208, and a MAC module 1209.

The upstream interface 1201 may be a fiber adapter, used as an interface connected to the ODN 130 to send or receive an/a upstream/downstream optical signal. Transmission optical paths of the first coupler 1202 and the second coupler 1203 overlap. The upstream optical signal transmitter 1205 is coupled to the transmission optical path of the second coupler 1203. The backward optical signal receiver 1204 is coupled to a reflection optical path of the second coupler 1203. The downstream optical signal receiver 1206 is coupled to a reflection optical path of the first coupler 1202.

The upstream interface 1201 sends the upstream service optical signal with the second wavelength $\lambda 2$ or an upstream test optical signal with the second wavelength $\lambda 2$ (which may also be referred to as a first upstream optical signal) to the OLT 110, and receives the downstream optical signal with the first wavelength $\lambda 1$ or receives a backward optical signal of the upstream test optical signal with the second wavelength. The first coupler 1202 may be a TFF, reflects the downstream optical signal with the first wavelength $\lambda 1$ that is sent by the OLT 110, to couple the downstream optical signal to the downstream optical signal receiver 1206, and transmits the upstream test optical signal with the second wavelength $\lambda 2$ and the backward optical signal of the upstream test optical signal with the second wavelength $\lambda 2$ (backward optical signal for short) to the second coupler 1203. The second coupler 1203 may be a ring coupler, and couples the backward optical signal to the backward optical signal receiver 1204. The first coupler 1202 may further transmit, to the upstream interface 1201, an upstream optical signal (including the upstream service optical signal and/or the upstream test optical signal) sent by the upstream optical signal transmitter 1205.

The downstream optical signal receiver 1206 is configured to receive the downstream optical signal with the first wavelength by using the first coupler 1202, and convert the downstream optical signal with the first wavelength into a downstream electrical signal. A wavelength of the downstream optical signal may be 1490 nm or 1577 nm. The upstream signal transmitter 1205 is configured to send the upstream service optical signal and the upstream test optical signal by using the second coupler 1203 and the first coupler 1202 and through the upstream interface 1201. The wavelength $\lambda 2$ of the upstream service optical signal is the same as the wavelength $\lambda 2$ of the upstream test optical signal, where $\lambda 2$ may be 1310 nm or 1270 nm.

The backward optical signal receiver 1204 is configured to receive the backward optical signal generated by the upstream test optical signal in a fiber-optic network, and convert the backward optical signal into a backward electric signal. A wavelength of the backward optical signal is the same as the wavelength $\lambda 2$ of the upstream test optical signal. The processing module 1208 is configured to obtain, based on a test parameter of the downstream optical signal parsed by the MAC module 1209, an intensity of the backward optical signal that is of the upstream test signal and that is received by the backward optical signal receiver 1204. The storage module 1207 is configured to store the test parameter and the intensity information of the backward optical signal. The MAC module 1209 is configured to parse the downstream electrical signal to obtain a test parameter and provide the test parameter to the processing module 1208. In an embodiment corresponding to FIG. 2B, the wavelength of the test optical signal is the same as the wavelength of the upstream service optical signal. The backward optical signal is a backward optical signal generated, through backscattering or reflection in the ODN 130, by the upstream optical signal sent by the ONT. The upstream optical signal transmitter 1205 is further configured to report intensity information of each backward optical signal to the OLT 110 through the ODN 130.

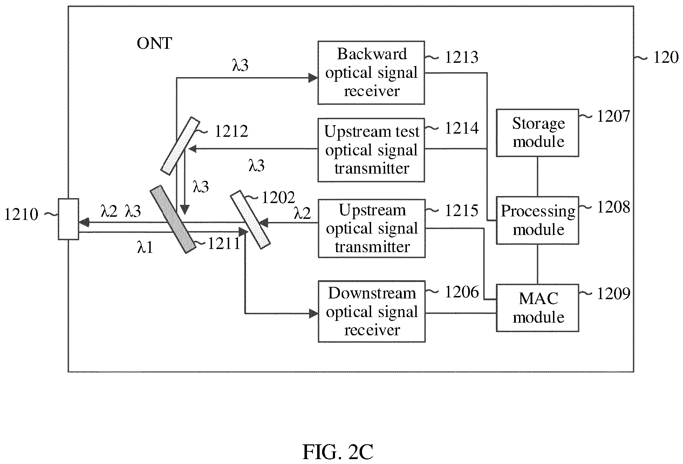

FIG. 2C is a schematic structural diagram of another optical network terminal 120 according to an embodiment of the present invention. Different from a structure in FIG. 2B, the optical network terminal 120 in FIG. 2C includes an upstream interface 1201, a first coupler 1202, a third coupler 1211, a fourth coupler 1212, a backward optical signal receiver 1213, an upstream test optical signal transmitter 1214, an upstream optical signal transmitter 1215, a downstream optical signal receiver 1206, a storage module 1207, a processing module 1208, and a MAC module 1209.

The upstream interface 1201 may be a fiber adapter, used as an interface connected to the ODN 130 to send or receive an/a upstream/downstream optical signal. Transmission optical paths of the first coupler 1202 and the third coupler 1211 overlap. The upstream optical signal transmitter 1205 is coupled to a transmission optical path of the first coupler 1202. The downstream optical signal receiver 1206 is coupled to a reflection optical path of the first coupler 1202. The transmission optical path of the third coupler 1211 and a reflection optical path of the fourth coupler 1212 overlap. The backward optical signal receiver 1213 is coupled to a transmission optical path of the fourth coupler 1212. The upstream test optical signal (which is also referred to as a first upstream optical signal) transmitter 1214 is coupled to the reflection optical path of the fourth coupler 1212.

The upstream interface 1201 and the first coupler 1202 have same function as the upstream interface 1201 and the first coupler 1202 in FIG. 2B. Details are not described herein again in this embodiment of the present invention. The first coupler 1202 is configured to transmit the upstream service optical signal with the second wavelength $\lambda 2$ and reflect the downstream optical signal with the first wavelength $\lambda 1$. The third coupler 1211 is configured to reflect an upstream test signal with a third wavelength $\lambda 3$ and reflect a backward optical signal of the received upstream test optical signal with the third wavelength $\lambda 3$, to transmit, in two directions, test signals with the third wavelength in a same wavelength or band. The third coupler 1211 is further configured to transmit the downstream optical signal with the first wavelength and transmit the upstream service optical signal with the second wavelength. The fourth coupler 1212 is configured to transmit the backward optical signal with the third wavelength $\lambda 3$ and reflect the upstream test optical signal with the third wavelength $\lambda 3$.

The downstream optical signal receiver 1206 is configured to receive a downstream optical signal with the first wavelength $\lambda 1$ by using the first coupler 1202 and the fourth coupler 1211, and convert the downstream optical signal into a downstream electrical signal. A wavelength of the downstream optical signal may be 1490 nm or 1577 nm. The upstream optical signal transmitter 1205 is configured to send, to the OLT 110, the upstream service optical signal by using the first coupler 1202 and the fourth coupler 1211 and through the upstream interface 1201. A third wavelength receiver 1213 is configured to receive, through the ODN 130, a backward optical signal generated by an upstream test signal sent by a first ONT 120. The first ONT 120 may be any ONT 120 that sends an upstream test signal in the PON system. A third wavelength transmitter 1214 is configured to send the upstream test signal with the third wavelength $\lambda 3$ to the OLT 110 through the ODN 130. The processing module 1208 is configured to control, based on data (for example, indication information) of a downstream electrical signal parsed by the MAC module 1209, the third wavelength transmitter 1212 to send the upstream test signal or receive the backward optical signal of the upstream test signal. The storage module 1207 is configured to store a test parameter and intensity information of the obtained backward optical signal. The MAC module is configured to parse the converted electrical signal to obtain the data information and provide the data information to the processing module 1208. In an embodiment corresponding to FIG. 2C, the wavelength of the upstream test optical signal is different from the wavelength of the upstream service optical signal.

It should be noted that, in FIG. 2B and FIG. 2C, that the ONT obtains the intensity information of the backward optical signal may be: obtaining the intensity information based on the backward optical signal measured by the ONT, or obtaining the intensity information of the backward optical signal based on a result of the backward optical signal measured by the OTDR.

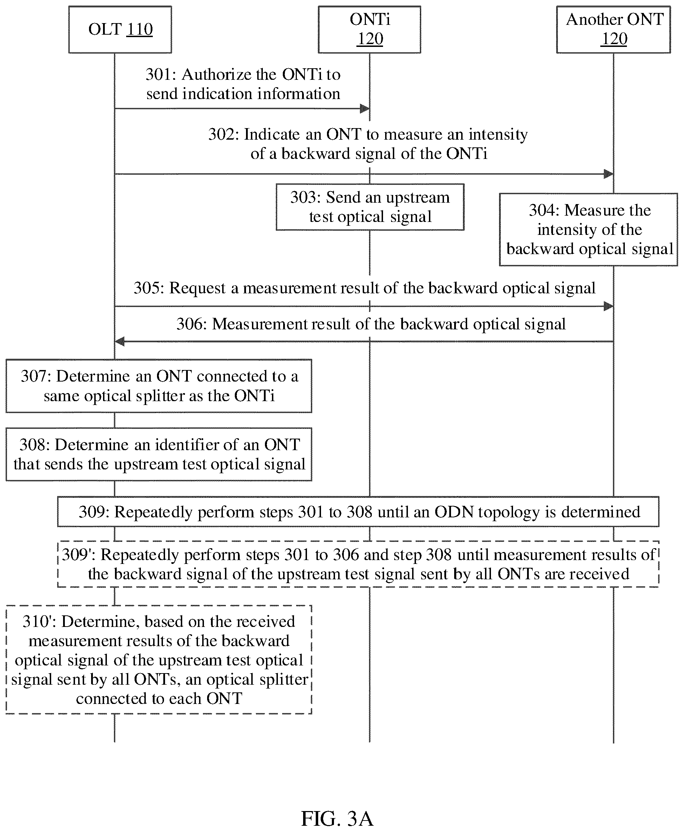

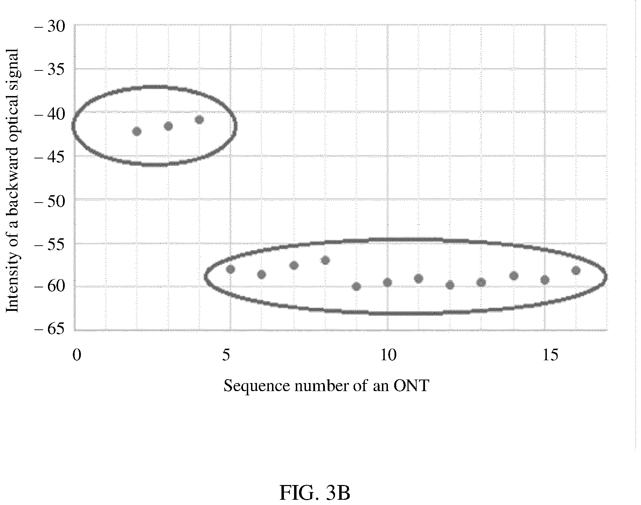

FIG. 3 is a method for determining an optical splitter connected to each ONT according to this application. This method is applied to a passive optical network system or an active optical network system. With reference to FIG. 1 to FIG. 2C, the method according to an embodiment of this application includes the following steps.

Step 301: The OLT 110 sends indication information to an ONTi 120 through a downstream optical signal in a downstream direction. The indication information carries an identifier of an optical network terminal sending the upstream test optical signal (for example, an identifier of the ONTi 120) and information about a time point at which the upstream test optical signal is sent. The indication information indicates the ONTi 120 to send the upstream test optical signal. For ease of description, an ONTi that sends an upstream test optical signal is referred to as a first ONT in this embodiment of this application.

The OLT 110 may select (for example, selecting in a random manner or another manner) an ONT that never sends an upstream test optical signal as the first ONT. For example, the OLT 110 identifies an ONT that has sent an upstream test optical signal, and determines the first ONT that sends an upstream test optical signal next time from ONTs that never sends an upstream test optical signal.

For another example, the OLT 110 selects, based on a preceding determining result, an ONT that an ONT in a same group as the ONT is not determined as the first ONT that sends an upstream test optical signal. The ONT in the same group as the ONT is an ONT that connects to a same optical splitter as the ONT sending the upstream test optical signal.

The upstream test signal may be an upstream service optical signal including normal communications data, a specific upstream optical signal including specific data (for example, "0101...", all 1, or any coding information), or a special testing signal whose wavelength is different from a wavelength of an upstream service optical signal. The wavelength of the upstream service optical signal may be the same as or different from a wavelength of the specific upstream optical signal. The special testing signal may be a signal sent by the upstream test optical signal transmitter 1214 in the ONT 120. A wavelength of the special testing signal may be 1650 nm or 1625 nm.

The information about the time point at which the upstream test signal is sent includes a start time of sending the upstream test signal. The downstream optical signal may further include an end time of sending the upstream test optical signal.

Step 302: The OLT 110 sends the indication information to the second ONT 120 through the downstream optical signal, to indicate the second ONT 120 to obtain an intensity of a backward optical signal of the upstream test signal sent by the first ONT.

For ease of description, in all ONTs 120 managed by the OLT 110 in this embodiment of this application, an ONT 120 that obtains the intensity information of the backward optical signal is referred to as the second ONT 120. The second ONT 120 is another ONT 120 other than the first ONT 120 sending the upstream test optical signal. The backward optical signal of the upstream test signal sent by the first ONT 120 is referred to as a backward optical signal of an ONTi for short, namely the backward optical signal of the first ONT 120. A control message may be sent to each second ONT 120 in a manner of an authorization message, a configuration message, or a notification message. A sequence of sending the control message and the authorization message is not limited.

The indication information further includes information about a time point at which the backward optical signal of the first ONT 120 is measured. The information about the time point at which the backward optical signal of the first ONT 120 is measured indicates a time point (for example, a delay) at which each second ONT 120 starts to measure the backward optical signal of the first ONT 120, or indicates a time point at which an OTDR corresponding to each second ONT 120 measures the backward optical signal of the first ONT 120. Each second ONT 120 or the OTDR corresponding to each second ONT 120 may measure the backward optical signal of the first ONT 120 at a same time point or different time points. For example, before implementing this embodiment of this application, the OLT 110 may obtain an RTT (Round trip time, round-trip time) or the RTT and an EqD (Equalization Delay, equalization delay) of each ONT 120, and determines, based on the RTT and/or the EqD of each ONT 120, the delay that each ONT 120 measures the backward optical signal of the first ONT. The delay is a time difference from a time point when the first ONT starts to send the upstream test optical signal to a time point when the second ONT starts to measure the backward optical signal of the first ONT. For a method for obtaining, by the OLT 110, the RTT and/or the EqD of each ONT 120, refer to a technology in an existing standard (for example, ITU-T G.984.3). Details are not described again in this embodiment of the present invention.

Further, the information about the time point at which the backward optical signal is measured further indicates duration of measuring the backward optical signal of the first ONT. The duration of measuring the backward optical signal of the first ONT is referred to as measurement duration for short. The measurement duration indicates a time length or an amount of data of the backward optical signal of the first ONT 120 that is measured by each second ONT 120 or by the OTDR corresponding to each second ONT 120. The time length of measuring the backward optical signal of the upstream test optical signal is duration of continuously testing, by the second ONT or the OTDR, the backward optical signal, for example, 3 seconds. That the amount of data of the backward optical signal of the upstream test optical signal is measured is a quantity of times of measuring the backward optical signal, for example, measuring the backward optical signal once at the first second or measuring the backward optical signal once at the second second after starting measurement.

Step 303: After receiving the indication information from the OLT 110, the first ONT 120 sends the upstream test optical signal based on the indication information.

Further, the indication information may further include the start time of sending the upstream test signal. The first ONT 120 starts to send the upstream test signal when determining that the start time of sending the upstream test signal arrives. Further, the indication information may further include duration of sending the upstream test signal or the end time of sending the upstream test signal. The first ONT 120 stops sending the upstream test signal when determining that the end time of sending the upstream test signal arrives.

In addition, if the indication information indicates the ONTi 120 to send the upstream test signal in a pulse manner, the ONTi 120 sends a pulse signal based on the indication in the authorization message. The authorization message may indicate the ONTi 120 to send a short pulse once or a plurality of times, or send a long pulse.

A wavelength of the upstream test optical signal may be the same as or different from the wavelength of the upstream service optical signal.

Step 304: After receiving the indication information from the OLT 110, the second ONT 120 obtains, based on the indication, the intensity information of the backward optical signal of the upstream test optical signal sent by the first ONT (namely the ONTi).

After receiving the indication information, each second ONT 120 or the OTDR corresponding to each second ONT 120 measures the intensity of the backward optical signal of the upstream test optical signal based on the information about the time point at which the backward optical signal is measured. Further, each second ONT stops receiving the backward optical signal of the upstream test optical signal based on the measurement duration.

Each second ONT obtains the intensity information of the backward optical signal that is measured by the second ONT 120 or the OTDR corresponding to the second ONT 120.

Step 305: The OLT 110 notifies each second ONT 120 to report the measurement result obtained by the second ONT.

The OLT 110 may notify, based on the information about the time point in the indication information, each second ONT 120 to report the intensity of the backward optical signal that is measured by each second ONT.

Step 306: The OLT 110 receives the measurement result reported by each second ONT, where the measurement result may be the intensity information of the backward optical signal of the upstream test signal. The measurement result may further carry an identifier of the second ONT, or carry the information about the time point at which the intensity information is measured by the second ONT or the OTDR corresponding to the second ONT, or carry information about an end time of sending the measurement result, so that the OLT determines the intensity information sent by each second ONT.

Step 307: The OLT 110 determines, based on the intensity information of the backward optical signal that is reported by the second ONT, a second ONT connected to the same optical splitter 132 as the first ONT. The second ONT connected to the same optical splitter 132 as the first ONT may also be referred to as a third ONT.

The OLT 110 stores thresholds of intensity differences between the backward optical signals measured by different groups of ONTs 120. The OLT 110 determines an ONT 120 in a same group as the first ONT 120, that is, the third ONT 120, based on determining the threshold of the intensity difference between the ONTs 120 in the same group. For example, the OLT 110 determines that a difference between an intensity of a first backward optical signal reported by an ONTh 120 and an intensity of the first backward optical signal returned by at least one second ONT is greater than the threshold of the intensity differences measured by the different groups. In this case, it may be determined that the ONTh is the ONT 120 in the same group as the first ONT 120.

Further, the OLT 110 stores thresholds of intensity differences between backward optical signals corresponding to split ratios of a first stage optical splitter. The intensity difference between the backward optical signals is a difference between an intensity of a backward optical signal obtained by the second ONT that is connected to the same optical splitter as the first ONT and an intensity of a backward optical signal obtained by a second ONT that is not connected to the same optical splitter as the first ONT, namely a difference between an intensity of a backward optical signal obtained by the third ONT and an intensity of a backward optical signal obtained by a fourth ONT. The fourth ONT is a second ONT that is not connected to the same optical splitter as the first ONT.

An intensity difference range corresponding to the split ratios of the first stage optical splitter is referred to as an intensity difference range of the split ratios for short, and may be determined according to Formula (1).

$$\text{Formula (1): } 2 * (3.5 * N) - X1, 2 * (3.5 * N) + X2$$

N is an exponent of 2. The split ratio is 2 to a power of N.

Therefore, when the split ratio of the first stage optical splitter is 2, N = 1, and the intensity difference range of the split ratio is [2 * (3.5 * N) - X1, 2 * (3.5 * N) + X2], where X1 and X2 may be adjusted based on an actual network, for example, X1 = X2 = 3.5. The intensity difference range of the split ratio is [3.5, 10.5]. When the split ratio of the first stage optical splitter is 4, N = 2, and the intensity difference range of the split ratio is [10.5, 17.5]. When the split ratio of the first stage optical splitter is 8, N = 3, and the intensity difference range of the split ratio is [17.5, 24.5].

Therefore, the thresholds of the intensity differences between the different groups may be greater than or equal to the intensity difference when N = 2. It should be noted that, in Formula (1): 2 * (3.5 * N) - X1, 3.5 and X1 are both empirical values. In a specific implementation, the empirical values may be properly adjusted based on composition of the ODN network, for example, an optical fiber material, a length, or another factor.

Step 308: The OLT 110 determines an identifier of the first ONT that sends the upstream test optical signal next time, and adds the determined identifier of the first ONT to the indication information in step 301.

The OLT 110 may select (for example, selecting in a random manner or another manner) an ONT that never sends the upstream test optical signal as the first ONT. For example, the OLT 110 may identify an ONT that has sent an upstream test optical signal. Therefore, the OLT 110 may determine the first ONT that sends an upstream test optical signal next time from ONTs that never send the upstream test optical signal.

In an optional manner, the OLT 110 may further select, based on the determined ONT in the same group as the first ONT, an ONT that an ONT in a same group as the ONT is not determined as the first ONT that sends an upstream test optical signal next time.

Step 309: The OLT repeatedly performs steps 301 to 308 to determine an optical splitter to which each second ONT 120 belongs.

In an optional manner, steps 307, 308, and 309 may alternatively be replaced with 309' and 310'. To be specific, after receiving the intensity of the backward optical signal of the upstream test optical signal sent by all ONTs, the OLT 110 determines an optical splitter connected to each ONT.

In an optional manner, information about authorizing the ONTi to send the upstream test optical signal and notifying each second ONT to measure the backward optical signal of the first ONT in steps 301 and 302 may alternatively be sent to each ONT in a same message.

For example, the ODN 130 includes a second stage optical splitter, and a split ratio of each stage is 1 x 4, that is, (1 x $2^N$, where N is equal to 2). Table 1 shows a length of the feeder fiber 133, a split ratio of the first stage optical splitter 131 (a first stage split ratio), a length of the distribute fiber 134, a split ratio of the second stage optical splitter 132 (a second stage split ratio for short), a length of the drop fiber 135, and a sequence number of the ONT 120 in the ODN.

**Table 1 Information about a second stage 1 x 16 PON system**

| OLT | Length of a feeder fiber (km) | First stage split ratio | Length of a distribute fiber (km) | Second stage split ratio | Length of a drop fiber (km) | Sequence number of an ONT |
|---|---|---|---|---|---|---|
| OLT | 7 | 1x4 | 7 | 1x4 | 3.4 | ONT 1 |
| | | | | | 2.5 | ONT 2 |
| | | | | | 1.9 | ONT 3 |
| | | | | | 2.2 | ONT 4 |
| | | | 1 | 1x4 | 3.1 | ONT 5 |
| | | | | | 4 | ONT 6 |
| | | | | | 3.4 | ONT 7 |
| | | | | | 1.3 | ONT 8 |
| | | | 8 | 1x4 | 2.5 | ONT 9 |
| | | | | | 2.8 | ONT 10 |
| | | | | | 1.3 | ONT 11 |
| | | | | | 2.2 | ONT 12 |
| | | | 3 | 1x4 | 3.7 | ONT 13 |
| | | | | | 1.9 | ONT 14 |
| | | | | | 3.4 | ONT 15 |
| | | | | | 1.3 | ONT 16 |

It should be noted that sequence numbers ONT 1 to ONT 16 are not identifiers of the ONTs, but indicate the sequence numbers of the ONTs connected to each optical splitter.

It is assumed that a fiber loss is 0.3 dB/km, an insertion loss of each branch of the first stage optical splitter 131 and the second stage optical splitter 132 is randomly distributed, and inconsistency of the insertion loss of each branch is 1.5 dB. Losses of parts of the ODN 130 shown in Table 1 are shown in Table 2.

**Table 2 Losses of parts in a second stage 1 x 16 ODN 130**

| Loss of a feeder fiber 133 (dB) | Loss of a first stage 1 x 4 optical splitter 131 (dB) | Loss of a distribute fiber 134 (dB) | Loss of a second stage 1 x 4 optical splitter 132 (dB) | Loss of a drop fiber 135 (dB) |
|---|---|---|---|---|
| 2.1 | 7.02 | 2.10 | 6.50 | 1.02 |
| | | | 7.39 | 0.75 |
| | | | 7.08 | 0.57 |
| | | | 6.20 | 0.66 |
| | 6.52 | 0.30 | 7.02 | 0.93 |
| | | | 7.38 | 1.2 |
| | | | 6.51 | 1.02 |
| | | | 6.49 | 0.39 |
| | 6.65 | 2.40 | 6.91 | 0.75 |
| | | | 6.36 | 0.84 |
| | | | 6.37 | 0.39 |
| | | | 6.81 | 0.66 |
| | 7.30 | 0.90 | 6.91 | 1.11 |
| | | | 6.72 | 0.57 |
| | | | 6.73 | 1.02 |
| | | | 6.31 | 0.39 |

It should be noted that the OLT 110 may obtain information in Table 1 and Table 2 through a signal test before executing this embodiment of this application, that is, before sending the authorization message.

It is assumed that an intensity of a Rayleigh scattered signal is -77 dB/ns (which is an empirical value), and all reflections and extra losses on the ODN 130 are ignored. In step 301, the OLT 110 authorizes, by using the authorization message, any ONT (for example, the ONT 1) as the first ONT to send the upstream test optical signal. In step 302, the OLT 110 notifies the second ONT (which is the ONT 2 to 16 in this example) to measure the intensity of the backward optical signal of the upstream test signal sent by the ONT 1. An average optical power of the upstream test optical signal sent by the ONT 1 is 2 dBm. The average optical power of the upstream test optical signal is also referred to as an intensity of the upstream test optical signal.

When there are the upstream test optical signals sent by the ONT 1 in the feeder fiber and the distribute fiber, the ONT 2 to the ONT 16 or a corresponding OTDR measure/measures the intensity of the backward optical signal of the upstream test signal based on measurement time information in the indication information. For example, the ONT 2 to the ONT 16 or the corresponding OTDR may measure the backward optical signal of the ONT 1 once or a plurality of times based on the indication message in step 303, and then the ONT 2 to the ONT 16 obtain the intensity of the backward optical signal measured by the ONT 2 to the ONT 16 or the corresponding OTDR. For example, if each second ONT or the OTDR measures the intensity for a plurality of times, an average value of the intensities measured for the plurality of times may be obtained, and the average value is used as an intensity of the backward optical signal of the upstream test signal.

For example, an equivalent loss of the 1 x 4 optical splitter is about 3.5 * N (N = 2). Because the upstream test signal reaches the feeder fiber 133 only after passing through the first stage optical splitter 131 once, the backward optical signal on the feeder fiber 133 reaches the distribute fiber 134 only after passing through the first stage optical splitter 131. When a factor such as a fiber length difference between the distribute fiber 134 and the feeder fiber 131 is ignored, an intensity of the backward optical signal on the feeder fiber 133 is 2 * (3.5 * N) dB lower than an intensity of a backward optical signal on the distribute fiber 134. Therefore, an intensity of a backward optical signal of the ONT 1 measured by the second ONT (which is an ONT connected to a same optical splitter as the ONTi) in a same group as the ONTi (namely the ONT 1) sending the upstream test optical signal is a sum of the intensity of the backward optical signal on the distribute fiber 134 and the intensity of the backward optical signal on the feeder fiber 133. Because the intensity of the backward optical signal on the distribute fiber 134 is greater than the intensity of the backward optical signal on the feeder fiber 133, the backward optical signal measured by the second ONT in the same group as the ONTi (namely the ONT 1) sending the upstream test optical signal is mainly the backward optical signal on the distribute fiber 134. In the second ONT (for example, the ONT 2 to the ONT 16), the backward optical signal measured by the second ONT that is in a different group from the ONTi sending the upstream test optical signal is mainly the backward optical signal on the feeder fiber 133. Therefore, the intensity of the backward optical signal measured by the ONT in the same group as the ONTi (namely the ONT 1) sending the upstream test optical signal is greater than the intensity of the backward optical signal measured by the ONT in a different group from the ONTi sending the upstream test optical signal. In addition, a difference between intensities of the backward optical signal measured by the ONTs in the same group and intensities of the backward optical signal measured by the ONTs in different groups is greater than the threshold of the intensity differences between the backward optical signals measured by the ONTs in different groups, for example, 7.

Each second ONT 120 (for example, the ONT 2 to the ONT 16) reports a measurement result of the backward optical signal of the first ONT to the OLT 110. FIG. 3B shows distribution of intensities of backward optical signals measured by the second ONTs 120 (for example, the ONT 2 to the ONT 16) that are obtained by the OLT 110. The OLT 110 groups the intensities of the backward optical signals measured by the ONT 2 to the ONT 16. A difference between the intensity of the backward optical signal measured by the ONT 2, the ONT 3, and the ONT 4 and the intensity of the backward optical signal measured by the ONT 5 to 16 is greater than 7. Therefore, the OLT 110 determines that the ONT 2, the ONT 3, and the ONT 4 are connected to a same optical splitter as the ONT 1, and the ONT 5 to 16 are connected to different optical splitters from the ONT 1.

Further, the OLT determines, based on the intensity information of the backward optical signal that is returned by each second ONT and thresholds of intensity differences between the different groups, a quantity of stages of the optical splitter and a split ratio of the optical splitter in the ODN network.

For example, as shown in FIG. 3B, an average value of the intensities of the backward optical signal measured by the first group of ONTs (ONT 2 to ONT 4) is about -42 dBm, and an average value of the intensities of the backward optical signal measured by ONT 5 to 16 is about -59 dBm. A difference between the average value of the intensities of the backward optical signal measured by the ONT 2 to the ONT 4 and the average value of the intensities of the backward optical signal measured by the ONT 5 to 16 is about 17 dB. Because 17 is within a range of [2 * (3.5 * N) - 3.5 (N = 2), 2 * (3.5 * N) + 3.5 (N = 3)] (that is, within [10.5, 17.5]), it can be determined that the split ratio of the first stage optical splitter is 1 x $2^2$ (that is, 1x4).

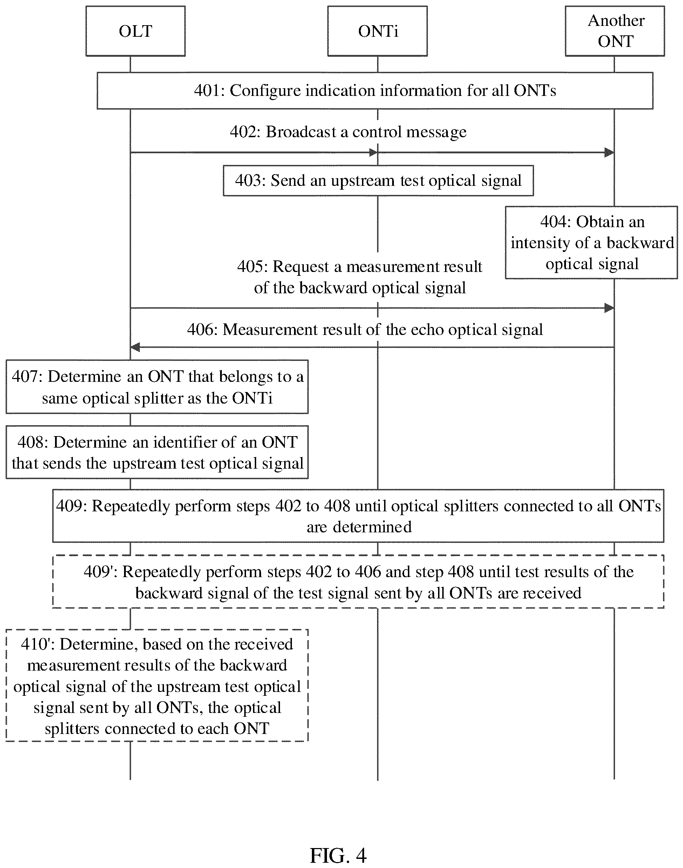

Based on the foregoing PON system 100, this application further provides a method for determining an ODN topology in a passive optical network system. Refer to FIG. 4. FIG. 4 is a flowchart of a method for determining an ODN topology according to an embodiment of this application. In the embodiment provided in FIG. 3, the OLT 110 first sends the indication information to the ONTi by using the authorization message, and then sends the indication to another ONT other than the ONTi in the PON system 100 by using the control message (or may send the control message to all ONTs), to indicate the second ONT or the corresponding OTDR to measure the backward optical signal of the upstream test optical signal sent by the ONTi. However, in the embodiment corresponding to FIG. 4, the OLT 110 configures test parameters for all ONTs before starting a test. In the embodiment provided in FIG. 4, the method includes the following steps.

Step 401: The OLT 110 configures indication information for the ONT 120, where the indication information includes information about a time point at which each upstream test signal is sent (for example, an identifier of each ONT sending the upstream test signal and a time point at which the upstream test signal is sent by each ONT) and information about a time point at which a backward optical signal is measured by each ONT (for example, a delay, duration, and a quantity of times of measuring the backward optical signal). Details are not described herein again in this embodiment of the present invention.

Step 402: The OLT broadcasts the indication information to the second ONT to start measuring the backward optical signal. The indication information may be a specific DBA authorization message. For a GPON/XG(S)-PON, the specific DBA authorization message may be an Alloc-id (Allocation identifier, allocation identifier), a BWmap (bandwidth map, bandwidth map) message broadcasting an Alloc-id (1021 or 1022), or a BWmap message specifying an Alloc-id. The indication information carries an identifier of the first ONT sending the upstream test signal, or carries an identifier of the first ONT and an identifier of the second ONT measuring the backward optical signal of the first ONT.

It should be noted that, step 402 is an optional step, and each ONT may start sending the upstream test signal or measuring the backward optical signal after receiving the indication information, or sending the upstream test signal or measuring the backward optical signal based on the information about the time point in the indication information.

Descriptions of steps 403 to 408 are consistent with descriptions of steps 303 to 308. This is not limited herein in this embodiment of the present invention.

Step 409: Repeatedly perform steps 402 to 409 until an optical splitter connected to each ONT 120 is determined.

In an optional manner, in procedures corresponding to FIG. 3 and FIG. 4, the second ONT 120 may further not send a measurement result to the OLT 110, but send the measurement result to any ONT in the PON system (for example, an ONTk, where the ONTk may be the same as or different from the ONTi). After receiving an intensity that is sent by the second ONT 120 and that is of the backward optical signal of the upstream test optical signal sent by the ONTi, the ONTk determines, based on the measurement result, a second ONT in a same group as the ONTi, and sends a determining result to the OLT. A method for determining, by the ONTk based on the intensity of the backward optical signal sent by each second ONT 120 to the ONTi, the second ONT in the same group as the ONTi is the same as a method for determining, by the OLT 110, a second ONT that is in the same group as the ONTi. Details are not described again in this embodiment of this application.

In an optional manner, in the embodiment provided in FIG. 4, after step 406, the OLT may not perform step 407, but perform step 408 and then repeatedly perform step 402 to step 406 and step 408 until the OLT 110 receives intensity information that is of backward optical signals of all the ONTs and that is sent by all the ONTs, and then determines, based on the received intensity information of the backward optical signals of all the ONTs, the optical splitter connected to each ONT.

For example, in the embodiment corresponding to FIG. 4, the ODN 130 system includes a second stage optical splitter, an ONT_2nx (n represents an $n^{th}$ second stage optical splitter, and x represents an $x^{th}$ ONT connected to the $n^{th}$ second stage optical splitter). A pulse width of the upstream test optical signal sent by the ONT is T. In the embodiment provided in FIG. 4, the method for determining an ONT connection includes the following steps.

Step 401: The OLT 110 configures indication information for all ONTs 120, where the indication information includes information about a time point at which an upstream test signal is sent and information about a time point at which a backward optical signal is measured by each ONT (for example, a delay, duration, and a quantity of times of measuring the backward optical signal).

For example, the OLT 110 indicates, in the configured indication information, an ONT 211 to send an upstream test optical signal at a moment t1, and the upstream test optical signal to arrive at an ONT_21x at a moment $t2 + \Delta t21x$ and to be received by a second receiver of the ONT_21x. A backward optical signal is generated on a common end (a port connected to a feeder fiber) of a first stage optical splitter 1 and the feeder fiber. The backward optical signal passes through the optical splitter 1, a distribute fiber, and an optical splitter 2n, and arrives at the ONT_2nx (n = 1, 2, 3, ...; and x = 1, 2, 3, ...) at a moment $t3 + \Delta t2nx$.

t1 is a time point at which the ONT 211 sends the upstream test optical signal, and $t2 + \Delta t21x$ is a time point at which the ONT 21X starts receiving the backward optical signal. $t3 + \Delta t2nx$ is a time point at which another ONT 2nx starts receiving the backward optical signal.

In an optional manner, the test parameters may further not include a start time point at which each ONT starts sending the upstream test signal and/or a time point at which each ONT starts measuring the backward optical signal. After the control message is received in step 402, the upstream test optical signal is sent or the backward optical signal of the upstream test signal is measured, based on information in the control message, for example, sending an identifier of an ONT sending an upstream test signal and/or an identifier of an ONT measuring a backward optical signal. Further, the control message further carries a time point at which the ONT sends the upstream test signal and/or a time point at which each second ONT measures the upstream test signal. Each ONT sends the upstream test optical signal or measures the backward optical signal of the upstream test optical signal based on information in the control message.

In an optional manner, steps 307, 308, and 310', or steps 407, 408, and 410 are not performed by the OLT, but are performed by the upper-layer network device 200 that is communicatively connected with the OLT. After receiving intensity information that is measured by the second ONT and that is of a backward optical signal of an upstream test optical signal, the OLT sends the intensity information that is measured by the second ONT and that is of the backward optical signal of the upstream test optical signal to the upper-layer network device, so that the upper-layer network device determines a third ONT connected to a same optical splitter as a first ONT. However, the upper-layer network device determines an identifier of an ONT sending the upstream test optical signal, or the OLT determines an identifier of an ONT sending the upstream test optical signal. A method for determining, by the upper-layer network device, the third ONT connected to the same optical splitter as the first ONT is the same as a method for determining, by the OLT, the third ONT connected to the same optical splitter as the first ONT. This is not limited in this embodiment of the present invention.

In another optional manner, after receiving the intensity information of the backward optical signal of the upstream test optical signal sent by the ONT serving as the first ONT, the OLT may further send the received intensity information to the upper-layer network device 200, and the upper-layer network device 200 determines an optical splitter connected to each ONT 120.

In step 310 or 410, the OLT 110 determines a relationship between optical splitters or a relationship between an ONT and an optical splitter based on an intensity of the backward optical signal that is sent by each ONT.

For example, M ONTs in the PON system use $Pb_{ab}(t)$ to represent an intensity of a backward optical signal received by a $b^{th}$ (the subscript b) ONT, when an $a^{th}$ (the subscript a) ONT sends an upstream wavelength optical signal (t represents that the intensity of the backward optical signal is a time function). When a is equal to b, it indicates that the ONT receives the intensity of the backward optical signal of the upstream wavelength optical signal sent by the ONT.

When the first ONT sends an upstream wavelength optical signal, an intensity of the optical signal received by all ONTs is {Pb11(t), Pb12(t), Pb13(t), ..., Pb1M(t)}.

When the second ONT sends an upstream wavelength optical signal, an intensity of the optical signal received by all ONTs is {Pb21(t), Pb22(t), Pb23(t), ..., Pb2M(t)}.

...

When the $M^{th}$ ONT sends an upstream wavelength optical signal, an intensity of the optical signal received by all ONTs is {PbM1(t), PbM2(t), PbM3(t), ..., PbMM(t)}.

$$PB(t) = \begin{bmatrix} Pb_{11}(t) & Pb_{12}(t) & ... & Pb_{1M}(t) \\ Pb_{21}(t) & Pb_{22}(t) & ... & Pb_{2M}(t) \\ ... & ... & ... & ... \\ Pb_{M1}(t) & Pb_{M2}(t) & ... & Pb_{MM}(t) \end{bmatrix}.$$

First matrix data is obtained, and

Alternatively, when an ONT does not measure a backward optical signal of the signal sent by the ONT, the following second matrix data may be obtained:

$$PB(t) = \begin{bmatrix} 0 & Pb_{12}(t) & ... & Pb_{1M}(t) \\ Pb_{21}(t) & 0 & ... & Pb_{2M}(t) \\ ... & ... & ... & ... \\ Pb_{M1}(t) & Pb_{M2}(t) & ... & 0 \end{bmatrix}.$$

Any row of the PB(t) matrix represents that one ONT sends an upstream test optical signal, and another ONT measures a backward optical signal of the upstream test optical signal sent by the ONT (namely, the first ONT). Any column represents that one ONT receives an intensity of the backward optical signal of the upstream test optical signal that is sent by another ONT serving as the first ONT.

The OLT 110 may further perform analysis or processing (for example, clustering) based on the PB(t), and determine ONTs connected to a same optical splitter. For example, the OLT 110 may obtain, based on each row of the PB(t), an ONT (connected to the same optical splitter) in a same group as an ONT sending a signal, or obtain, based on each column, an ONT (connected to the same optical splitter) in a same group as an ONT receiving a signal. For example, when a time length T (or referred to as a testing pulse width) of sending an upstream test optical signal by an ONT is greater than a time of transmitting the optical signal from the ONT sending the optical signal to an OLT (for example, T is greater than a maximum value of RTTs in a registration or ranging process of all ONTs), any value in $Pb_{ab}(t)$ may be selected, or an average value of $Pb_{ab}(t)$ is used as a measured value of a backward optical signal to perform grouping calculation.

Alternatively, when a pulse width T of sending an upstream test optical signal by an ONT is less than a time of transmitting the optical signal from the ONT sending the optical signal to an OLT (for example, T = 10 $\mu$s), a maximum value in $Pb_{ab}(t)$ is selected as a measurement value of a backward optical signal to perform grouping calculation.

Optionally, because intensities (namely, optical powers) of upstream wavelength optical signals sent by ONTs are different, PB(t) may further be analyzed or processed after normalization processing is performed on PB(t). Specifically, $Pb'_{ab}(t) = Pb_{ab}(t) - Pa$, where Pa represents an intensity of an upstream test optical signal sent by the $a^{th}$ ONT. PB'(t) is obtained. An ODN topology structure is reconstructed or restored by analyzing or processing PB'(t).

It is assumed that a loss of a drop fiber connected to the ONT_2nx (n=1, 2, ...; and x=1, 2, ...) is Le_2nx;

a loss of a distribute fiber connected to the optical splitter 2n (n = 1, 2, ...) is Ld_2n, and a backward loss is $\alpha\_2n$;
a loss of the second stage optical splitter 2n (n = 1, 2, ...) is Lsp_2n (n = 1, 2, ...);
a loss of the first stage optical splitter 1 is Lsp_1; and
an intensity of an upstream test optical signal sent by the ONT_211 is Pu_211.

Then, an intensity of a backward optical signal received by the ONT_21x in a same group as the ONT_211 is

$$Pb21x \sim= Pu\_211 - Le\_211 - Lsp\_21 - \alpha\_21 - Lsp\_21 - Le\_21x.$$

An intensity of a backward optical signal received by the ONT_2nx of the second stage optical splitter in different groups from the ONT_211 is

$$Pb2nx \sim= Pu\_211 - Le\_211 - Lsp\_21 - Ld\_21 - Lsp\_1 - \alpha\_2n - Lsp\_1 - Ld\_2n - Lsp\_2n - Le\_2nx.$$

Then, P21x - Pb2nx = (Ld_21 + Lsp_1 + $\alpha$_2n + Lsp_1 + Ld_2n + Lsp_2n + Le_21x) - ($\alpha$_21 - Lsp_21 - Le_21x), and

$$P21x - Pb2nx = 2 * Lsp\_1 + (Ld\_21 + Ld\_2n + Le\_2nx - Le\_21x) + (\alpha\_2n - \alpha\_21) + (Lsp\_2n - Lsp\_21).$$

When split ratios of optical splitters at a same stage are the same, Lsp_21 ~= Lsp_2n. In addition, when backward losses on a normal ODN line are similar,

$$P21x - Pb2nx = 2 * Lsp\_1 + (Ld\_21 + Ld\_2n + Le\_2nx - Le\_21x).$$

A loss of an optical splitter with a split ratio of 1:2N (or 1 * 2N) is N * 3.5 dB, that is, P21x - Pb2nx >> 0 (far greater than 0). Therefore, it can be easily determined that the ONT_21x and the ONT_211 belong to a same second stage optical splitter, and the ONT_2nx belongs to another second stage optical splitter. The foregoing steps are repeatedly performed to obtain connection relationships between all ONTs and second stage optical splitters.

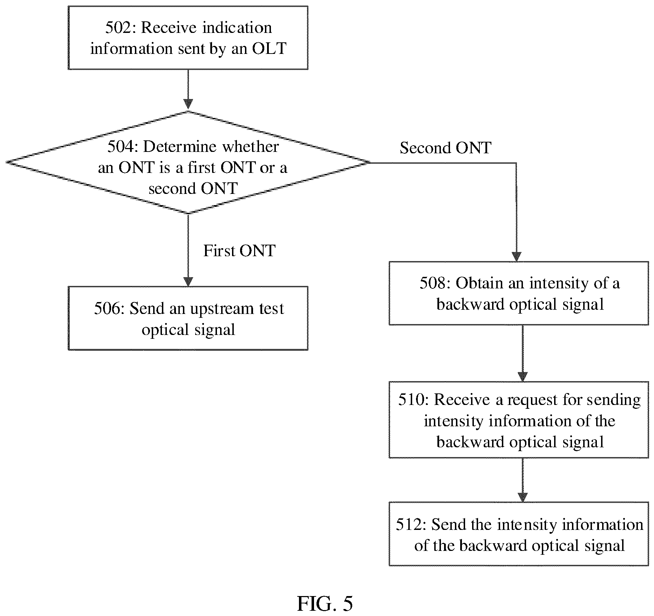

FIG. 5 is a flowchart of a method for measuring an intensity of a received backward optical signal that is performed by an ONT after receiving a message from an OLT according to an embodiment of this application; and The method includes the following steps.

Step 502: The ONT 120 receives a downstream optical signal that carries indication information and that is sent by the OLT 110 through an authorization message or a control message, where the indication information is used to indicate the ONT 120 to serve as a first ONT sending an upstream test signal or to serve as a second ONT measuring the upstream test signal.

For example, the indication information may be the information in step 301 or 302, or the information in step 402. This is not limited in this embodiment of the present invention.

Step 504: The ONT 120 determines whether the ONT 120 is the first ONT or the second ONT based on the received indication information. If the ONT 120 determines that the ONT 120 is the first ONT, step 506 is performed. If the ONT 120 determines that the ONT 120 is the second ONT, step 508 is performed.

Step 506: The ONT 120 sends the upstream test optical signal based on an indication in the indication information. Description of step 502 is the same as descriptions of step 303. This is not limited in this embodiment of the present invention.

Step 508: The ONT 120 obtains an intensity of a backward optical signal of the upstream test signal based on an indication in the indication information. Description of step 508 is the same as descriptions of step 304. This is not limited in this embodiment of the present invention.

Step 510: The ONT 120 receives a request sent by the OLT for sending the intensity information of the backward optical signal. Description of step 510 is the same as description of step 305. Alternatively, the request indicates the ONT 120 to send the intensity information of the backward optical signal to another ONT.

Step 512: The ONT 120 sends the intensity information of the backward optical signal. The ONT 120 sends the intensity information of the backward optical signal to the OLT 110 or sends to another ONT 120, based on an indication of the request.

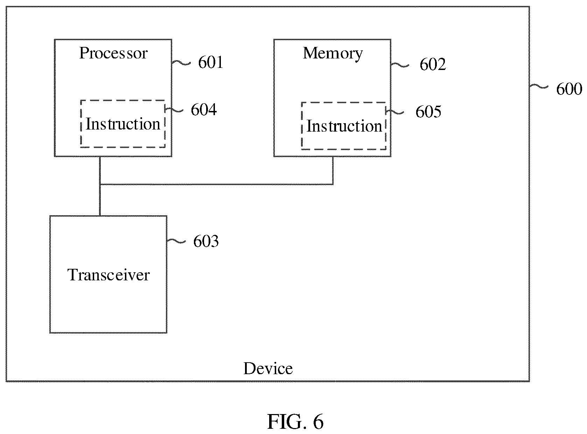

FIG. 6 is a schematic structural diagram of a device according to this application. The packet processing device may be an OLT, an ONT, or an upper-layer network device. The device may be configured to implement the method in a corresponding part described in the foregoing method embodiments. For details, refer to the description in the foregoing method embodiments.

The packet processing device may include one or more processors 601. The processor 601 may also be referred to as a processing unit, and may implement a specific control function. The processor 601 may be a general-purpose processor, a dedicated processor, or the like. For example, the processor 601 may be a baseband processor or a central processing unit. The baseband processor may be configured to process a communications protocol and communications data. The central processing unit may be configured to control a communications apparatus (for example, a base station, a baseband chip, a DU, or a CU), execute a software program, and process data in the software program.

In a possible design, the processor 601 may further store instructions 604. The instructions 604 may be run by the processor, so that the packet processing device performs the method that corresponds to the terminal or the network device described in the foregoing method embodiments.

In still another possible design, the device may include a circuit. The circuit may implement a sending function, a receiving function, or a communication function in the foregoing method embodiments.

Optionally, the packet processing device may include one or more memories 602. The memory 602 stores instructions 605 or intermediate data. The instructions 605 may be run by the processor 601, so that the packet processing device performs the method described in the foregoing method embodiments. Optionally, the memory 602 may further store other related data. Optionally, the processor 601 may also store instructions and/or data. The processor 601 and the memory 602 may be separately disposed, or may be integrated together.

Optionally, the packet processing device may further include a transceiver 603. The processor 601 may be referred to as a processing unit. The transceiver 603 may be referred to as a transceiver unit, a transceiver machine, a transceiver circuit, a transceiver, or the like, and is configured to implement a transceiver function of the communications apparatus.

This application further provides a readable storage medium. The readable storage medium stores executable instructions. When at least one processor of the packet processing device executes the executable instructions, the packet processing device performs the packet processing method in the foregoing method embodiments.

This application further provides a program product. The program product includes executable instructions, and the executable instructions are stored in a readable storage medium. At least one processor of a packet processing device may read the executable instructions from the readable storage medium. The at least one processor executes the executable instructions, so that the packet processing device implements the packet processing method in the foregoing method embodiments.

The foregoing descriptions are merely example implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical network terminal, ONT (120), comprising:
   a downstream optical signal receiver (1206), configured to:

   receive (302, 402) a first downstream optical signal, wherein the first downstream optical signal indicates the ONT (120) to obtain a backward optical signal generated by a first upstream optical signal sent (303, 403) by another ONT (120) in a fiber-optic network and includes information about a time point at which the backward optical signal of the another ONT (120) is measured;
   a backward optical signal receiver (1204, 1213), configured to receive the backward optical signal generated by the first upstream optical signal in the fiber-optic network;
   a processing module (1208), configured to obtain (304, 404) intensity information of the backward optical signal based on indication information of the first downstream optical signal; and
   an upstream optical signal transmitter (1205, 1215), configured to send (306, 406) a second upstream optical signal, wherein the second upstream optical signal carries the intensity information of the backward optical signal.

2. The ONT (120) according to claim 1, wherein the downstream optical signal receiver (1206) is further configured to receive (301) a second downstream optical signal, and the second downstream optical signal carries indication information that indicates the ONT (120) to send (303) the first upstream optical signal and information about a time point at which the ONT (120) sends the first upstream optical signal.

3. The ONT (120) according to claim 1, wherein the first downstream optical signal further carries an identifier of the ONT (120) sending the first upstream optical signal and information about the time point at which the first upstream optical signal is sent.

4. The ONT according to any one of claims 1 to 3, wherein the upstream optical signal transmitter (1205, 1215) is further configured to send (303, 403) the first upstream optical signal based on the indication information of the processing module (1208), and a wavelength of the first upstream optical signal, a wavelength of the backward optical signal, and a wavelength of the second upstream optical signal are the same.

5. A method for determining an optical network terminal ONT (120) connection, comprising:

   receiving (302, 402) a first downstream optical signal, wherein the first downstream optical signal indicates an ONT (120) to obtain a backward optical signal generated by a first upstream optical signal sent (303, 403) by another ONT (120) in a fiber-optic network and includes information about a time point at which the backward optical signal of the another ONT (120) is measured;

receiving the backward optical signal generated by the first upstream optical signal in the fiber-optic network;

obtaining (304, 404) intensity information of the backward optical signal based on an indication information of the first downstream optical signal; and

sending (306, 406) a second upstream optical signal, wherein the second upstream optical signal carries the intensity information of the backward optical signal.

6. The method according to claim 5, wherein the method further comprises:

receiving (301), by the another ONT (120), a second downstream optical signal, wherein the second downstream optical signal carries indication information that indicates the another ONT (120) to send (303) the first upstream optical signal and information about a time point at which the another ONT (120) sends the first upstream optical signal.

7. The method according to claim 5, wherein the first downstream optical signal further carries an identifier of the ONT (120) sending the first upstream optical signal and information about the time point at which the first upstream optical signal is sent.

8. The method according to any one of claims 5 to 7, wherein the method further comprises:

sending (303, 403) the first upstream optical signal, wherein a wavelength of the first upstream optical signal, a wavelength of the backward optical signal, and a wavelength of the second upstream optical signal are the same.

9. A method for determining an optical network terminal ONT (120) connection, comprising:

receiving, by a device, intensity information of a backward optical signal that is sent (306, 406) by a second ONT (120), wherein the backward optical signal is a backward optical signal that is generated, in a fiber-optic network, by a first upstream optical signal sent (303, 403) by a first ONT (120), and the second ONT (120) is another ONT (120) other than the first ONT (120) sending the first upstream optical signal in a PON system (100); and

determining (407), by the device based on the intensity information of the backward optical signal that is sent by the second ONT (120), a third ONT (120) which is a second ONT (120) connected to a same optical splitter (131, 132) as the first ONT (120) by determining that a difference between intensity information sent by the third ONT (120) and intensity information sent by at least one second ONT (120) is greater than an intensity difference threshold of the optical splitter (131, 132).

10. The method according to claim 9, wherein the device is an optical network terminal ONT (120) and the method further comprises:

receiving, by the ONT (120), a first downstream optical signal, wherein the first downstream optical signal carries indication information that indicates the ONT (120) to send (303, 403) the first upstream optical signal, information about a time point at which the first upstream optical signal is sent, and indication information that indicates the ONT (120) to obtain the intensity information of the backward optical signal that is sent by the second ONT (120).

11. The method according to claim 9, wherein the device is an upper-layer network device (200), and the receiving, by a device, intensity information that is sent (306, 406) by the second ONT (120) and that is of a backward optical signal generated by a first upstream optical signal in a fiber-optic network comprises: receiving, by the upper-layer network device (120), the intensity information that is sent by an optical line terminal (120) and obtained (304, 404) by the second ONT (120) and that is of the backward optical signal generated by the first upstream optical signal in the optical fiber network.

12. The method according to claim 9, wherein the method further comprises:

sending (305, 405), by the device, a third downstream optical signal, wherein the third downstream optical signal indicates the second ONT (120) to send (306, 406) the intensity information of the backward optical signal.

13. A device (600), comprising a memory (602) and a processor (601), wherein the memory (602) is configured to store computer-executable instructions (605), and when the device (600) runs, the processor (601) executes the computer-executable instructions (605) stored in the memory (602), so that the device (600) performs the method according to any one of claims 9 to 12.

**Patentansprüche**

1. Optisches Netzwerkendgerät (ONT) (120), umfassend:
   einen Empfänger (1206) für optische Downstream-Signale, der dazu konfiguriert ist:

   ein erstes optisches Downstream-Signal zu empfangen (302, 402), wobei das erste optische Downstream-Signal das ONT (120) hinweist, ein optisches Rückwärtssignal zu erlangen, das durch ein erstes optisches Upstream-Signal generiert wird, das durch ein anderes ONT (120) in einem Glasfasernetzwerk gesendet (303, 403) wird, und Informationen über einen Zeitpunkt beinhaltet, zu welchem das optische Rückwärtssignal des anderen ONT (120) gemessen wird;
   einen Empfänger (1204, 1213) für optische Rückwärtssignale, der dazu konfiguriert ist, durch das erste optische Upstream-Signal in dem Glasfasernetzwerk generierte optische Rückwärtssignal zu empfangen;
   ein Verarbeitungsmodul (1208), das dazu konfiguriert ist, Intensitätsinformationen des optischen Rückwärtssignals basierend auf Hinweisinformationen des ersten optischen Downstream-Signals zu erlangen (304, 404); und
   einen Sender (1205, 1215) für optische Upstream-Signale, der dazu konfiguriert ist, ein zweites optisches Upstream-Signal zu senden (306, 406), wobei das zweite optische Upstream-Signal die Intensitätsinformationen des optischen Rückwärtssignals überträgt.

2. ONT (120) nach Anspruch 1, wobei der Empfänger (1206) für optische Downstream-Signale ferner dazu konfiguriert ist, ein zweites optisches Downstream-Signal zu empfangen (301), und das zweite optische Downstream-Signal Hinweisinformationen überträgt, die das ONT (120) hinweisen, das erste optische Upstream-Signal und Informationen über einen Zeitpunkt zu senden (303), zu welchem das ONT (120) das erste optische Upstream-Signal sendet.

3. ONT (120) nach Anspruch 1, wobei das erste optische Downstream-Signal ferner eine Kennung des ONT (120), welches das erste optische Upstream-Signal sendet, und Informationen über den Zeitpunkt überträgt, zu welchem das erste optische Upstream-Signal gesendet wird.

4. ONT nach einem der Ansprüche 1 bis 3, wobei der Sender (1205, 1215) für optische Upstream-Signale ferner dazu konfiguriert ist, das erste optische Upstream-Signal basierend auf den Hinweisinformationen des Verarbeitungsmoduls (1208) zu senden (303, 403), und eine Wellenlänge des ersten optischen Upstream-Signals, eine Wellenlänge des optischen Rückwärtssignals und eine Wellenlänge des zweiten optischen Upstream-Signals gleich sind.

5. Verfahren zum Bestimmen einer Verbindung für optische Netzwerkendgeräte ONT (120), umfassend:

   Empfangen (302, 402) eines ersten optischen Downstream-Signals, wobei das erste optische Downstream-Signal ein ONT (120) angibt, um ein optisches Rückwärtssignal zu erlangen, das durch ein erstes optisches Upstream-Signal generiert wird, das durch ein anderes ONT (120) in einem Glasfasernetzwerk gesendet (303, 403) wird, und Informationen über einen Zeitpunkt beinhaltet, zu welchem das optische Rückwärtssignal des anderen ONT (120) gemessen wird;
   Empfangen des optischen Rückwärtssignals, das durch das erste optische Upstream-Signal in dem Glasfasernetzwerk generiert wird;
   Erlangen (304, 404) von Intensitätsinformationen des optischen Rückwärtssignals basierend auf Hinweisinformationen des ersten optischen Downstream-Signals; und
   Senden (306, 406) eines zweiten optischen Upstream-Signals, wobei das zweite optische Upstream-Signal die Intensitätsinformationen des optischen Rückwärtssignals überträgt.

6. Verfahren nach Anspruch 5, wobei das Verfahren ferner Folgendes umfasst:
   Empfangen (301) eines zweiten optischen Downstream-Signals durch das andere ONT (120), wobei das zweite optische Downstream-Signal Hinweisinformationen überträgt, die das andere ONT (120) hinweist, das erste optische Upstream-Signal und Informationen über einen Zeitpunkt zu senden (303), zu welchem das andere ONT (120) das erste optische Upstream-Signal sendet.

7. Verfahren nach Anspruch 5, wobei das erste optische Downstream-Signal ferner eine Kennung des ONT (120), welches das erste optische Upstream-Signal sendet, und Informationen über den Zeitpunkt überträgt, zu welchem das erste optische Upstream-Signal gesendet wird.

8. Verfahren nach einem der Ansprüche 5 bis 7, wobei das Verfahren ferner Folgendes umfasst:

Senden (303, 403) des ersten optischen Upstream-Signals, wobei eine Wellenlänge des ersten optischen Upstream-Signals, eine Wellenlänge des optischen Rückwärtssignals und eine Wellenlänge des zweiten optischen Upstream-Signals gleich sind.

9. Verfahren zum Bestimmen einer Verbindung für optische Netzwerkendgeräte ONT (120), umfassend:

Empfangen von Intensitätsinformationen eines optischen Rückwärtssignals, das durch ein zweites ONT (120) gesendet (306, 406) wird, durch eine Vorrichtung, wobei das optische Rückwärtssignal ein optisches Rückwärtssignal ist, das in einem Glasfasernetzwerk durch ein erstes optisches Upstream-Signal, das durch ein erstes ONT (120) gesendet (303, 403) wird, generiert wird, und das zweite ONT (120) ein anderes ONT (120) als das erste ONT (120) ist, welches das erste optische Upstream-Signal in einem PON-System (100) sendet; und

Bestimmen (407), durch die Vorrichtung basierend auf den Intensitätsinformationen des optischen Rückwärtssignals, welches durch das zweite ONT (120) gesendet wird, von einem dritten ONT (120), welches ein zweites ONT (120) ist, das mit demselben optischen Splitter (131, 132) wie das erste ONT (120) durch Bestimmen verbunden ist, dass eine Differenz zwischen Intensitätsinformationen, die durch das dritte ONT (120) gesendet werden, und Intensitätsinformationen, die durch mindestens ein zweites ONT (120) gesendet werden, größer als ein Schwellenwert für die Intensitätsdifferenz des optischen Splitters (131, 132) ist.

10. Verfahren nach Anspruch 9, wobei die Vorrichtung ein optisches Netzwerkendgerät ONT (120) ist und das Verfahren ferner Folgendes umfasst:
Empfangen eines ersten optischen Downstream-Signals durch das ONT (120), wobei das erste optische Downstream-Signal Hinweisinformationen überträgt, die das ONT (120) hinweisen, das erste optische Upstream-Signal, Informationen über einen Zeitpunkt, zu welchem das erste optische Upstream-Signal gesendet wird, und Hinweisinformationen, die das ONT (120) hinweisen, die Intensitätsinformationen des optischen Rückwärtssignals zu erlangen, welches durch das zweite ONT (120) gesendet wird, zu senden (303, 403).

11. Verfahren nach Anspruch 9, wobei die Vorrichtung eine Netzwerkvorrichtung (200) der oberen Schicht ist und das Empfangen, durch eine Vorrichtung, von Intensitätsinformationen, die durch das zweite ONT (120) gesendet (306, 406) werden und von einem optischen Rückwärtssignal stammen, das durch ein erstes optisches Upstream-Signal in einem Glasfasernetzwerk generiert wird, Folgendes umfasst: Empfangen, durch die Netzwerkvorrichtung (120) der oberen Schicht, der Intensitätsinformationen, die durch ein optisches Leitungsendgerät (120) gesendet und durch das zweite ONT (120) erlangt (304, 404) werden und die von dem optischen Rückwärtssignal stammen, das durch das erste optische Upstream-Signal in dem Glasfasernetzwerk generiert wird.

12. Verfahren nach Anspruch 9, wobei das Verfahren ferner Folgendes umfasst:
Senden (305, 405) eines dritten optischen Downstream-Signals durch die Vorrichtung, wobei das dritte optische Downstream-Signal das zweite ONT (120) hinweist, die Intensitätsinformationen des optischen Rückwärtssignals zu senden (306, 406).

13. Vorrichtung (600), umfassend einen Speicher (602) und einen Prozessor (601), wobei der Speicher (602) dazu konfiguriert ist, computerausführbare Anweisungen (605) zu speichern, und der Prozessor (601) beim Ausführen der Vorrichtung (600) die im Speicher (602) gespeicherten computerausführbaren Anweisungen (605) derart ausführt, dass die Vorrichtung (600) das Verfahren nach einem der Ansprüche 9 bis 12 durchführt.

**Revendications**

1. Terminal de réseau optique, ONT, (120) comprenant :
un récepteur de signal optique aval (1206), configuré pour :

recevoir (302, 402) un premier signal optique aval, dans lequel le premier signal optique aval indique à l'ONT (120) d'obtenir un signal optique arrière généré par un premier signal optique amont envoyé (303, 403) par un autre ONT (120) dans un réseau à fibres optiques et comporte des informations concernant un instant auquel le signal optique arrière de l'autre ONT (120) est mesuré ;
un récepteur de signal optique arrière (1204, 1213), configuré pour recevoir le signal optique arrière généré par le premier signal optique amont dans le réseau à fibres optiques ;
un module de traitement (1208), configuré pour obtenir (304, 404) des informations d'intensité du signal optique arrière sur la base d'informations d'indication du premier signal optique aval ; et

un émetteur de signal optique amont (1205, 1215), configuré pour envoyer (306, 406) un second signal optique amont, dans lequel le second signal optique amont transporte les informations d'intensité du signal optique arrière.

2. ONT (120) selon la revendication 1, dans lequel le récepteur de signal optique aval (1206) est en outre configuré pour recevoir (301) un deuxième signal optique aval, et le deuxième signal optique aval transporte des informations d'indication qui indiquent à l'ONT (120) d'envoyer (303) le premier signal optique amont et des informations concernant un instant auquel l'ONT (120) envoie le premier signal optique amont.

3. ONT (120) selon la revendication 1, dans lequel le premier signal optique aval transporte en outre un identifiant de l'ONT (120) envoyant le premier signal optique amont et des informations concernant l'instant auquel le premier signal optique amont est envoyé.

4. ONT selon l'une quelconque des revendications 1 à 3, dans lequel l'émetteur de signal optique amont (1205, 1215) est en outre configuré pour envoyer (303, 403) le premier signal optique amont sur la base des informations d'indication du module de traitement (1208), et une longueur d'onde du premier signal optique amont, une longueur d'onde du signal optique arrière et une longueur d'onde du second signal optique amont sont identiques.

5. Procédé de détermination d'une connexion de terminal de réseau optique ONT (120), comprenant :

la réception (302, 402) d'un premier signal optique aval, dans lequel le premier signal optique aval indique à un ONT (120) d'obtenir un signal optique arrière généré par un premier signal optique amont envoyé (303, 403) par un autre ONT (120) dans un réseau à fibres optiques et comporte des informations concernant un instant auquel le signal optique arrière de l'autre ONT (120) est mesuré ;

la réception du signal optique arrière généré par le premier signal optique amont dans le réseau à fibres optiques ;

l'obtention (304, 404) d'informations d'intensité du signal optique arrière sur la base d'informations d'indication du premier signal optique aval ; et

l'envoi (306, 406) d'un second signal optique amont, dans lequel le second signal optique amont transporte les informations d'intensité du signal optique arrière.

6. Procédé selon la revendication 5, dans lequel le procédé comprend en outre :

la réception (301), par l'autre ONT (120), d'un deuxième signal optique aval, dans lequel le deuxième signal optique aval transporte des informations d'indication qui indiquent à l'autre ONT (120) d'envoyer (303) le premier signal optique amont et des informations concernant un instant auquel l'autre ONT (120) envoie le premier signal optique amont.

7. Procédé selon la revendication 5, dans lequel le premier signal optique aval transporte en outre un identifiant de l'ONT (120) envoyant le premier signal optique amont et des informations concernant l'instant auquel le premier signal optique amont est envoyé.

8. Procédé selon l'une quelconque des revendications 5 à 7, dans lequel le procédé comprend en outre :

l'envoi (303, 403) du premier signal optique amont, dans lequel une longueur d'onde du premier signal optique amont, une longueur d'onde du signal optique arrière et une longueur d'onde du second signal optique amont sont identiques.

9. Procédé de détermination d'une connexion de terminal de réseau optique ONT (120), comprenant :

la réception, par un dispositif, d'informations d'intensité d'un signal optique arrière qui est envoyé (306, 406) par un deuxième ONT (120), dans lequel le signal optique arrière est un signal optique arrière qui est généré, dans un réseau à fibres optiques, par un premier signal optique amont envoyé (303, 403) par un premier ONT (120), et le deuxième ONT (120) est un autre ONT (120) autre que le premier ONT (120) envoyant le premier signal optique amont dans un système PON (100) ; et

la détermination (407), par le dispositif sur la base des informations d'intensité du signal optique arrière qui est envoyé par le deuxième ONT (120), d'un troisième ONT (120) qui est un deuxième ONT (120) connecté à un même séparateur optique (131, 132) comme premier ONT (120) en déterminant qu'une différence entre les informations d'intensité envoyées par le troisième ONT (120) et les informations d'intensité envoyées par au moins un deuxième ONT (120) est supérieure à un seuil de différence d'intensité du séparateur optique (131, 132) .

**10.** Procédé selon la revendication 9, dans lequel le dispositif est un terminal de réseau optique ONT (120) et le procédé comprend en outre :
la réception, par l'ONT (120), d'un premier signal optique aval, dans lequel le premier signal optique aval transporte des informations d'indication qui indiquent à l'ONT (120) d'envoyer (303, 403) le premier signal optique amont, des informations concernant un instant auquel le premier signal optique amont est envoyé, et des informations d'indication qui indiquent à l'ONT (120) d'obtenir les informations d'intensité du signal optique arrière qui sont envoyées par le deuxième ONT (120).

**11.** Procédé selon la revendication 9, dans lequel le dispositif est un dispositif de réseau de couche supérieure (200), et la réception, par un dispositif, d'informations d'intensité qui sont envoyées (306, 406) par le deuxième ONT (120) et qui sont d'un signal optique arrière généré par un premier signal optique amont dans un réseau à fibres optiques comprend : la réception, par le dispositif de réseau de couche supérieure (120), des informations d'intensité qui sont envoyées par un terminal de ligne optique (120) et obtenues (304, 404) par le deuxième ONT (120) et qui sont du signal optique arrière généré par le premier signal optique amont dans le réseau à fibres optiques.

**12.** Procédé selon la revendication 9, dans lequel le procédé comprend en outre :
l'envoi (305, 405), par le dispositif, d'un troisième signal optique aval, dans lequel le troisième signal optique aval indique au deuxième ONT (120) d'envoyer (306, 406) les informations d'intensité du signal optique arrière.

**13.** Dispositif (600), comprenant une mémoire (602) et un processeur (601), dans lequel la mémoire (602) est configurée pour stocker des instructions exécutables par ordinateur (605), et lorsque le dispositif (600) s'exécute, le processeur (601) exécute les instructions exécutables par ordinateur (605) stockées dans la mémoire (602), de sorte que le dispositif (600) exécute le procédé selon l'une quelconque des revendications 9 à 12.

FIG. 1

FIG. 2A

FIG. 2B

FIG. 2C

| OLT 110 | ONTi 120 | Another ONT 120 |
|---------|----------|-----------------|

301: Authorize the ONTi to send indication information

302: Indicate an ONT to measure an intensity of a backward signal of the ONTi

303: Send an upstream test optical signal

304: Measure the intensity of the backward optical signal

305: Request a measurement result of the backward optical signal

306: Measurement result of the backward optical signal

307: Determine an ONT connected to a same optical splitter as the ONTi

308: Determine an identifier of an ONT that sends the upstream test optical signal

309: Repeatedly perform steps 301 to 308 until an ODN topology is determined

309': Repeatedly perform steps 301 to 306 and step 308 until measurement results of the backward signal of the upstream test signal sent by all ONTs are received

310': Determine, based on the received measurement results of the backward optical signal of the upstream test optical signal sent by all ONTs, an optical splitter connected to each ONT

FIG. 3A

FIG. 3B

| OLT | ONTi | Another ONT |
|---|---|---|

401: Configure indication information for all ONTs

402: Broadcast a control message

403: Send an upstream test optical signal

404: Obtain an intensity of a backward optical signal

405: Request a measurement result of the backward optical signal

406: Measurement result of the echo optical signal

407: Determine an ONT that belongs to a same optical splitter as the ONTi

408: Determine an identifier of an ONT that sends the upstream test optical signal

409: Repeatedly perform steps 402 to 408 until optical splitters connected to all ONTs are determined

409': Repeatedly perform steps 402 to 406 and step 408 until test results of the backward signal of the test signal sent by all ONTs are received

410': Determine, based on the received measurement results of the backward optical signal of the upstream test optical signal sent by all ONTs, the optical splitters connected to each ONT

FIG. 4

502: Receive indication
information sent by an OLT

504: Determine whether
an ONT is a first ONT or a
second ONT

Second ONT

First ONT

506: Send an upstream test
optical signal

508: Obtain an intensity of a
backward optical signal

510: Receive a request for sending
intensity information of the
backward optical signal

512: Send the intensity information
of the backward optical signal

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2141832 A1

- EP 2602946 A2